Europäisches Patentamt

European Patent Office

Office européen des brevets

(11) Veröffentlichungsnummer: **0 429 755 A2**

# (12) EUROPÄISCHE PATENTANMELDUNG

(21) Anmeldenummer: 90113832.1

(22) Anmeldetag: 19.07.90

(51) Int. Cl.⁵: **B60R 16/02**

(30) Priorität: 01.12.89 DE 3939772

(43) Veröffentlichungstag der Anmeldung:
05.06.91 Patentblatt 91/23

(84) Benannte Vertragsstaaten:
DE FR GB IT SE Patentblatt 00/1

(71) Anmelder: FATEC FAHRZEUGTECHNIK GmbH
Borsigstrasse 2
W-8755 Alzenau(DE)

(72) Erfinder: Tibken, Martin
Höhenstrasse 14
W-6231 Schwalbach/Ts.(DE)
Erfinder: Hinrichsen, Lutz-Gunter
Holunderweg 6
W-8755 Alzenau(DE)
Erfinder: Mann, Arnold
Streitfeld 5
W-6465 Bieber(DE)

(74) Vertreter: Könekamp, Herbert, Dipl.-Ing. et al
Patentassessoren Dipl.-Ing. Herbert
Könekamp/Dipl.-Ing.(FH)Thomas
KleinSodener Strasse 9 Postfach 61 40
W-6231 Schwalbach(DE)

(54) **Verfahren zur Anzeige des Bremszustandes.**

(57) Es wird ein Verfahren zur Anzeige des Bremszustandes in einem Bremssystem mit automatischer Blockierverhinderung ohne systemimmanente Pedalrückwirkung bei Einsetzen der Blockierverhinderungsregelung an einem Rad angegeben. Ohne systemimmanente Pedalrückwirkung erhält der Fahrer keine Information darüber, wann die Blockierverhinderungsregelung einsetzt oder ob er das Optimum der Bremsverzögerung bereits erreicht hat oder nicht. Dies soll mit dem vorliegenden Verfahren erreicht werden. Dazu wird die Anzahl und/oder die Anordnung der in der Blockierverhinderungsregelung befindlichen Radbremszylinder (8-11) und/oder das Druckniveau im Bremssystem ermittelt, daraus eine Kenngröße gebildet und diese Kenngröße angezeigt.

## VERFAHREN ZUR ANZEIGE DES BREMSZUSTANDES

Die Erfindung betrifft ein Verfahren zur Anzeige des Bremszustandes in einem Bremssystem mit automatischer Blockierverhinderung ohne systemimmanente Pedalrückwirkung bei Einsetzen der Blockierverhinderungsregelung an einem Rad.

Systembedingt gibt es bei einigen Bremsanlagen mit automatischer Blockierverhinderung während einer Bremsung, bei der die Blockierverhinderungsregelung eingreift, eine Pedalrückwirkung (habtischer Effekt). Diese Pedalrückwirkung zeigt jedoch nur an, daß sich mindestens ein Rad in der Blockierverhinderungsregelung befindet, nicht aber, ob das Fahrzeug bereits eine maximale Bremsverzögerung, also einen optimalen Bremszustand, erreicht hat. Wenn sich beispielsweise nur ein Rad in der Blockierverhinderungsregelung befindet, kann das Fahrzeug durch eine weitere Erhöhung des Bremsdrucks noch besser verzögert werden. Diese Erhöhung des Bremsdrucks kann aber nur durch den Fahrer bewirkt werden, der aber durch den bereits frühzeitig einsetzenden habtischen Effekt am Pedal von einem weiteren Bremsdruckaufbau abgehalten wird, da er der Überzeugung ist, daß sich sein Fahrzeug bereits in einem optimalen Bremszustand befindet.

Bei Bremssystemen mit automatischer Blokkierverhinderung, die systembedingt keinen habtischen Effekt während einer Regelung erzeugen, erhält der Fahrer keine Information über den Bremszustand des Fahrzeugs. Derartige Bremssysteme sind beispielsweise aus "Technische Information ABS FaTec C2" bekannt. Die Information über den Bremszustand kann aber für den Fahrer wichtig sein. Der Fahrer sollte wissen, ob die automatische Blockierverhinderungsregelung eingesetzt hat und er sollte wissen, ob das Fahrzeug bereits den optimalen Bremszustand, d.h. die bei gegebenen Straßen- und Untergrundverhältnissen optimale Bremsverzögerung, erreicht hat.

Der Erfindung liegt die Aufgabe zugrunde, ein Verfahren zur Anzeige des Bremszustandes in einem System mit automatischer Blockierverhinderung ohne systemimmanente Pedalrückwirkung bei Einsetzen der Blockierverhinderungsregelung an einem Rad anzugeben.

Diese Aufgabe wird erfindungsgemäß dadurch gelöst, daß die Anzahl und/oder die Anordnung der in der Blockierverhinderungsregelung befindlichen Räder und/oder das Druckniveau im Bremssystem ermittelt, daraus eine Kenngröße gebildet und diese Kenngröße angezeigt wird.

Der Fahrer erhält also durch diese Anzeige eine zuverlässige Information darüber, in welchem Bremszustand sich sein Fahrzeug befindet. Dies vermittelt ihm eine Entscheidungshilfe dafür, ob er beispielsweise den Bremsdruck noch weiter erhöhen soll, um rechtzeitig vor einem Hindernis zum Stehen zu kommen, oder ob er lieber dem Hindernis ausweichen soll, sofern dies möglich ist. Dadurch, daß die Anzeige unabhängig von der tatsächlich einsetzenden Blockierverhinderungsregelung erzeugt wird, lassen sich mit dem erfindungsgemäßen Verfahren verschiedene Regelungs- bzw. Meldephilosophien realisieren.

In einer bevorzugten Ausführungsform wird zur Bildung der Kenngröße eine dem Reibwert zwischen Rädern und Untergrund entsprechende Größe ermittelt, daraus ein optimaler Bremszustand ermittelt, der tatsächliche Bremszustand ermittelt und die Kenngröße entsprechend dem Unterschied zwischen optimalem und tatsächlichen Bremszustand gebildet. Dem Fahrer wird also angezeigt, welche Reserven ihm noch zur Verfügung stehen. Wenn er sich noch nicht im optimalem Bremszustand befindet, wird ihm signalisiert, daß er die Bremsverzögerung weiter erhöhen kann, um das Fahrzeug schneller zum Stehen zu bringen. Dies erhöht die Sicherheit beim Fahren ganz erheblich.

Dabei ist bevorzugt, daß die Kenngröße einen Maximal-Anzeigewert annimmt, wenn der Unterschied zwischen optimalem und tatsächlichem Bremszustand ein vorbestimmtes Maß unterscheidet. Der Maximal-Anzeigewert wird angezeigt, um dem Fahrer zu signalisieren, daß er bereits den optimalen Bremszustand erreicht hat und keine weiteren Reserven im Bremssystem vorhanden sind.

In einer vorteilhaften Ausgestaltung nimmt die Kenngröße einen Maximal-Anzeigewert an, wenn sich eine vom Druckniveau im Bremssystem abhängige Anzahl und/oder Anordnung von Rädern in der Blockierverhinderungsregelung befindet. Das Druckniveau im Bremssystem ist zusammen mit der Information über eine einsetzende Blockierverhinderungsregelung eine Kenngröße für den Reibwert zwischen Rad und Straße. Wenn der Untergrund glatt ist, d.h. der Reibwert niedrig ist, setzt die Blockierverhinderungsregelung bereits bei einem niedrigen Druckniveau ein. Der optimale Bremszustand kann hier also bereits dann erreicht sein, wenn das Druckniveau einen relativ niedrigen Wert hat. Umgekehrt setzt die Blockierverhinderungsregelung bei einem hohen Reibwert auch erst bei einem hohen Druckniveau ein. Der optimale Bremszustand ist dann ein anderer. Bevorzugterweise wird also der optimale Bremszustand abhängig von den äußeren Gegebenheiten ermittelt. Bei unterschiedlichen Druckniveaus wird der optimale Bremszustand mit unterschiedlichen Konstellationen der Räder erreicht, die sich in der Blockierverhinderungsregelung befinden.

So kann die Kenngröße den Maximal-Anzeigewert annehmen, wenn das Druckniveau einen vorbestimmten Wert übersteigt und sich die beiden Vorderräder in der Blockierverhinderungsregelung befinden. Wenn das Druckniveau den vorbestimmten Wert übersteigt, ist dies ein Zeichen dafür, daß der Reibwert zwischen Rad und Unterlage relativ groß ist. Beim Einsetzen der Blockierverhinderungsregelung an den Vorderrädern hat das Fahrzeug also bereits eine sehr starke Bremsverzögerung erhalten, so daß der größte Teil der Bremslast von den Vorderrädern getragen wird.

Übersteigt hingegen das Druckniveau den vorbestimmten Wert nicht, nimmt die Kenngröße den Maximal-Anzeigewert an, wenn sich, bei einer Select-Low-Regelung an der Hinterachse, die beiden Vorderräder und ein Hinterrad in der Blockierverhinderungsregelung befinden. Die Select-Low-Regelung sorgt dafür, daß die gesamte Hinterachse lediglich ein Druckniveau für die beiden Radbremszylinder bekommt und zwar das niedrigere der beiden Hinterräder. Es reicht deswegen aus, wenn ein Hinterrad in die Anzeige eingebunden wird.

Bei Systemen ohne Select-Low-Regelung, d.h. bei einer unabhängigen Blockierverhinderungsregelung aller Räder, nimmt die Kenngröße den Maximal-Anzeigewert an, wenn das Druckniveau den vorbestimmten Wert nicht übersteigt und sich alle Räder in der Blockierverhinderungsregelung befinden. Bei einem niedrigen Reibwert, d.h. bei einem glatten Untergrund, wird die maximale Bremsverzögerung am besten dann erreicht, wenn sich alle Räder in der Blockierverhinderungsregelung befinden, d.h. an der Grenze zur Blockierung betrieben werden.

Mit Vorteil wird der Wert der Kenngröße vom Einsetzen der Blockierverhinderungsregelung an kontinuierlich angezeigt. Der Fahrer wird also darüber informiert, daß die Blockierverhinderungsregelung eingesetzt hat. Dies gibt ihm einen Hinweis darauf, daß er sich langsam den Grenzen der Bremsverzögerung zu nähern beginnt.

Dabei ist bevorzugt, daß die Kenngröße optisch angezeigt wird, wobei mit abnehmendem Unterschied zwischen optimalem und tatsächlichem Bremszustand Helligkeit und/oder Farbe der Anzeige verändert werden. Der Fahrer kann durch ein geeignetes optisches Signal sehr intensiv darauf hingewiesen werden, wie weit er noch vom Optimum der Bremsverzögerung entfernt wird.

In einer weiteren Ausführungsform, die auch mit dem optischen Signal zusammen verwendet werden kann, kann die Kenngröße mit Hilfe eines akustischen Signals angezeigt werden, wobei mit abnehmendem Unterschied zwischen dem optimalen und dem tatsächlichen Bremszustand die Frequenz und/oder die Amplitude des akustischen Signals verändert wird.

Eine dritte Alternative ist, daß die Kenngröße intermittierend angezeigt wird, wobei sich die Wiederholfrequenz mit abnehmendem Unterschied zwischen optimalem und tatsächlichem Bremszustand verändert.

Weiterhin kann die Kenngröße durch Vibrationsbewegungen des Bremspedals angezeigt werden, wobei mit abnehmendem Unterschied zwischen optimalem und tatsächlichem Bremszustand die Vibrationsfrequenz verändert wird.

Alle Anzeigen können getrennt voneinander oder parallel miteinander betrieben werden. Es ist auch denkbar, daß bei Einsetzen der Blockierverhinderungsregelung zunächst ein optisches Signal angezeigt wird, bei einer Annäherung an das Optimum ein akustisches Signal hinzukommt und bei der maximal erreichbaren Bremsverzögerung das Bremspedal in Vibrationen versetzt wird.

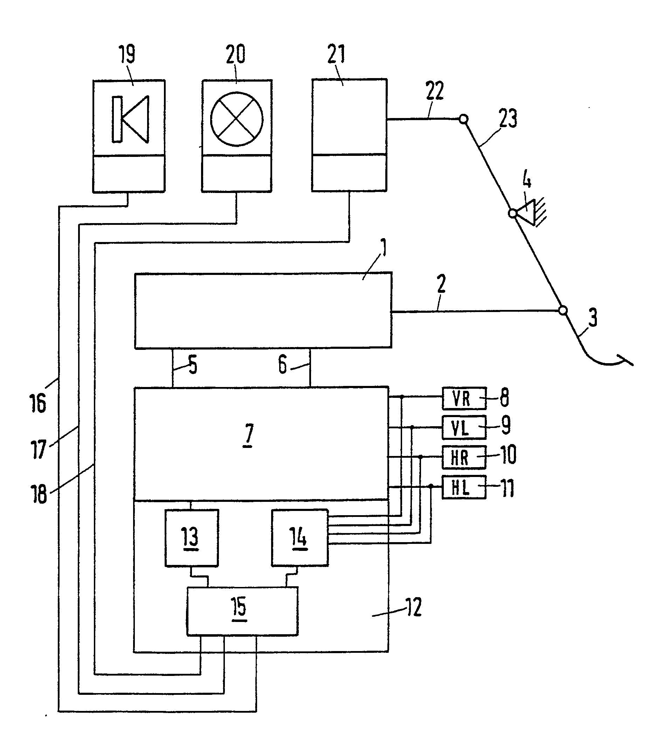

Die Erfindung wird im folgenden anhand eines bevorzugten Ausführungsbeispiels in Verbindung mit der Zeichnung beschrieben. Die einzige Figur darin zeigt ein Bremssystem zur Durchführung des Verfahrens.

Ein Hauptbremszylinder 1 wird über eine Betätigungsstange 2 bei Durchtreten eines Bremspedales 3, das an einem festen Karosseriepunkt 4 drehbar aufgehängt ist, betätigt. Der im Hauptbremszylinder 1 erzeugte Druck wird über Bremsleitungen 5, 6 an eine Blockierverhinderungsregeleinrichtung 7 weitergeleitet. Die Blockierverhinderungsregeleinrichtung betätigt Radbremszylinder 8-11, wobei sie dafür sorgt, daß bei einer beginnenden Blockierung eines Rades der Druck in dem betreffenden Radbremszylinder 8-11 wieder erniedrigt wird, um ein Blockieren des Rades zu verhindern.

Mit der Blockierverhinderungsregeleinrichtung 7 ist eine Anzeigensteuereinrichtung 12 verbunden. Diese weist einen Drucksensor 13 auf, der das Druckniveau im Bremssystem erfaßt. Der Druck kann auch ohne Drucksensor indirekt ermittelt werden. Weiterhin ist ein Regelungssensor 14 vorgesehen, der erfaßt, welches Rad sich in der Blockierverhinderungsregelung befindet. Der Drucksensor 13 und der Regelungssensor 14 geben ihre jeweiligen Ausgangssignale an eine Auswerteeinrichtung 15 weiter. Die Auswerteeinrichtung löst in Abhängigkeit des vom Drucksensor 13 ermittelten Drucks und der Anzahl und/oder der Anordnung der in der Blockierverhinderungsregelung befindlichen Radbremszylinder 8-11 über eine Leitung 16 die Betätigung eines akustischen Signalgebers 19, über eine Leitung 17 die Betätigung eines optischen Signalgebers 20 und/oder über eine Leitung 18 die Betätigung eines Signalgebers 21, der am Bremspedal 3 eine Art habtischen Effekt erzeugt, aus. Im Signalgeber 21 ist dazu eine Einrichtung vorgesehen, die über eine Betätigungsstange 22 und einen mit dem Bremspedal 3 fest verbundenen Hebel 23 eine Vibration oder Schwingung am Bremspedal 3 erzeugt.

Die Auswerteeinrichtung 15 bildet in Abhängigkeit von der Anzahl und/oder der Anordnung der in der Blockierverhinderungsregelung befindlichen Radbremszylinder 8-11 und/oder des Druckniveaus eine Kenngröße und daraus einen optimalen Bremszustand. Der optimale Bremszustand ergibt sich unter anderem aus dem Reibwert zwischen den Rädern und dem Untergrund, der über das durch den Drucksensor 13 erfaßte Druckniveau erfaßt wird. Der tatsächliche Bremszustand wird im wesentlichen über den Regelungssensor 14 erfaßt, der feststellt, welche Radbremszylinder 8-11 sich in der Regelung befinden. Die Auswerteeinrichtung 15 erzeugt ein akustisches, optisches oder habtisches Signal, wenn mindestens ein Radbremszylinder 8-11 zur Blockierverhinderung geregelt wird. Darüber hinaus ermittelt die Auswerteeinrichtung 15 aber auch den Unterschied zwischen dem optimalen Bremszustand und dem tatsächlich gegebenen Bremszustand und erzeugt ein Signal, das diesem Unterschied entspricht. Je geringer der Unterschied zwischen dem tatsächlich erreichten Bremszustand und dem optimalen Bremszustand ist, desto stärker soll dieses Signal die Aufmerksamkeit des Fahrers auf sich ziehen. So kann zum Beispiel der akustische Signalgeber mit abnehmendem Unterschied, also mit zunehmender Annäherung des Bremszustandes an das Optimum, immer lauter werden oder einen höheren Ton erzeugen. Der optische Signalgeber 20 kann mit zunehmender Annäherung des Bremszustandes an das Optimum immer heller werden und/oder in eine Signalfarbe, beispielsweise Rot wechseln. Der habtische Signalgeber 21 kann die Vibrationen am Bremspedal 3 verstärken oder die Frequenz der Vibrationen erhöhen. Es ist auch denkbar, daß die drei gezeigten Signalgeber der Reihe nach in Aktion treten. Beispielsweise kann zuerst ein akustisches Signal durch den Signalgeber 19 erzeugt werden, bei einer weiteren Annäherung des Bremszustandes an das Optimum tritt ein optisches Signal durch den optischen Signalgeber 20 hinzu und schließlich, bei einem nahezu optimalen erreichten Bremszustand wird der habtische Signalgeber 21 dazugeschaltet. Natürlich sind auch andere Anzeigemöglichkeiten, etwa auf einer Skala, denkbar.

Der optimale Bremszustand ist nicht fest vorgegeben, sondern wird in Abhängigkeit von äußeren Einflußfaktoren, insbesondere dem Reibwert zwischen Rad und Untergrund, ermittelt. Der Reibwert wird indirekt über das Druckniveau im Bremssystem erfaßt. Beispielsweise wird bei einem Druckniveau oberhalb eines vorbestimmten Wertes angenommen, daß der optimale Bremszustand bereits dann erreicht ist, wenn sich die beiden Vorderräder in der Blockierverhinderungsregelung befinden. In diesem Fall ist nämlich die Bremsverzögerung so stark, daß der größte Teil der Bremsleistung von den Vorderrädern aufgebracht werden muß. Anstelle des Druckniveaus oder zusätzlich dazu läßt sich auch die tatsächliche Verzögerung messen und als Kriterium für einen optimalen Bremszustand verwerten. Hat das Druckniveau den vorbestimmten Wert bei Einsetzen der Blockierverhinderungsregelung noch nicht überschritten, ist dies ein Zeichen dafür, daß der Reibwert zwischen Rad und Untergrund unterhalb einer bestimmten Grenze liegt. In diesem Fall ist es sinnvoll, den Druck im Bremssystem so lange zu erhöhen, bis sich auch die Hinterräder in einer Blockierverhinderungsregelung befinden, um einen optimalen Bremszustand zu erreichen. Dabei wird der optimale Zustand als erreicht betrachtet, wenn sich alle vier Räder in der Regelung befinden, wenn das Fahrzeug so ausgelegt ist, daß sich alle vier Räder unabhängig voneinander regeln lassen. Bei Fahrzeugen, die mit einer sogenannten "Select-Low-Regelung" ausgestattet sind, herrscht an beiden Radbremszylindern der Hinterachse 10, 11 jeweils der gleiche Druck und zwar der niedrigere Druck von beiden Bremszylindern, der sich ohne Select-Low-Regelung dort einstellen würde. In diesem Fall reicht es aus, den optimalen Bremszustand anzunehmen, wenn sich die beiden Vorderräder und mindestens ein Hinterrad in der Regelung befindet.

Das Verfahren kann auch so abgeändert werden, daß bereits dann ein Signal gegeben wird, wenn sich die Räder der Vorderachse in der Regelung befinden, wenn sich die Vorderachse um mindestens ein Hinterrad in der Regelung befinden oder wenn sich alle Räder in der Regelung befinden. Hierbei würde das Druckniveau im Bremssystem keine Rolle spielen. Durch zusätzliche Auswertung der Verzögerungswerte des Fahrzeugs und/oder des Bremsdruckniveaus läßt sich eine bessere Aussage darüber treffen, ob das Optimum bereits erreicht ist oder nicht. Man kann dann auch darauf verzichten, bereits den Beginn der Blockierverhinderungsregelung anzuzeigen und lediglich dann die Anzeigen betätigen, wenn der optimale Bremszustand erreicht ist.

## Ansprüche

1. Verfahren zur Anzeige des Bremszustandes in einem Bremssystem mit automatischer Blockierverhinderung ohne systemimmanente Pedalrückwirkung bei Einsetzen der Blockierverhinderungsregelung an einem Rad, dadurch gekennzeichnet, daß die Anzahl und/oder die Anordnung der in der Blockierverhinderungsregelung befindlichen Räder und/oder das Druckniveau im Bremssystem ermittelt, daraus eine Kenngröße gebildet kund diese Kenngröße angezeigt wird.

2. Verfahren nach Anspruch 1, dadurch gekennzeichnet, daß zur Bildung der Kenngröße eine dem Reibwert zwischen Rädern und Untergrund entsprechende Größe ermittelt wird, daraus ein optimaler Bremszustand ermittelt wird, der tatsächliche Bremszustand ermittelt wird und die Kenngröße entsprechend dem Unterschied zwischen optimalem und tatsächlichem Bremszustand gebildet wird.

3. Verfahren nach Anspruch 2, dadurch gekennzeichnet, daß die Kenngröße einen Maximal-Anzeigewert annimmt, wenn der Unterschied zwischen optimalem und tatsächlichem Bremszustand ein vorbestimmtes Maß unterschreitet.

4. Verfahren nach einem der Ansprüche 1 bis 3, dadurch gekennzeichnet, daß die Kenngröße einen Maximal-Anzeigewert annimmt, wenn sich eine vom Druckniveau im Bremssystem abhängige Anzahl und/oder Anordnung von Rädern in der Blockierverhinderungsregelung befindet.

5. Verfahren nach Anspruch 4, dadurch gekennzeichnet, daß die Kenngröße den Maximal-Anzeigewert annimmt, wenn das Druckniveau einen vorbestimmten Wert übersteigt und sich die beiden Vorderräder in der Blockierverhinderungsregelung befinden.

6. Verfahren nach Anspruch 4 oder 5, dadurch gekennzeichnet, daß bei einer Select-Low-Regelung an der Hinterachse die Kenngröße den Maximal-Anzeigewert annimmt, wenn das Druckniveau den vorbestimmten Wert nicht übersteigt und sich die beiden Vorderräder und ein Hinterrad in der Blockierverhinderungsregelung befinden.

7. Verfahren nach Anspruch 4 oder 5, dadurch gekennzeichnet, daß bei einer unabhängigen Blockierverhinderungsregelung aller Räder die Kenngröße den Maximal-Anzeigewert annimmt, wenn das Druckniveau den vorbestimmten Wert nicht übersteigt und sich alle Räder in der Blockierverhinderungsregelung befinden.

8. Verfahren nach einem der Ansprüche 1 bis 7, dadurch gekennzeichnet, daß der Wert der Kenngröße vom Einsetzen der Blockierverhinderungsregelung an kontinuierlich angezeigt wird.

9. Verfahren nach Anspruch 8, dadurch gekennzeichnet, daß die Kenngröße optisch angezeigt wird, wobei mit abnehmendem Unterschied zwischen optimalem und tatsächlichem Bremszustand die Helligkeit und/oder die Farbe der Anzeige verändert werden.

10. Verfahren nach Anspruch 8 oder 9, dadurch gekennzeichnet, daß die Kenngröße mit Hilfe eines akustischen Signales angezeigt wird, wobei mit abnehmendem Unterschied zwischen optimalem und tatsächlichem Bremszustand Frequenz und/oder Amplitude des akustischen Signals verändert werden.

11. Verfahren nach einem der Ansprüche 8 bis 10, dadurch gekennzeichnet, daß die Kenngröße intermittierend angezeigt wird, wobei sich mit abnehmendem Unterschied zwischen optimalem und tatsächlichem Bremszustand die Wiederholfrequenz verändert.

12. Verfahren nach einem der Ansprüche 8 bis 11, dadurch gekennzeichnet, daß die Kenngröße durch Vibrationsbewegungen des Bremspedals angezeigt wird, wobei mit abnehmendem Unterschied zwischen optimalem und tatsächlichem Bremszustand die Vibrationsfrequenz verändert wird.